# FASCICULE DE BREVET EUROPEEN

(11) **EP 3 137 548 B1**
(45) Date de publication et mention de la délivrance du brevet: **09.05.2018**
(21) Numéro de dépôt: 15720283.9
(22) Date de dépôt: 16.04.2015
(51) Int. Cl.: C08L 69/00

(54) **COMPOSITION THERMOPLASTIQUE**
THERMOPLASTISCHE ZUSAMMENSETZUNG
THERMOPLASTIC COMPOSITION

(30) Priorité: 28.04.2014 FR 1453800
(43) Date de publication de la demande: 08.03.2017
(73) Titulaire: Valeo Vision, 93012 Bobigny Cedex (FR)
(72) Inventeur: BARRE, Laurent Luc, 93012 Bobigny Cedex (FR)
(74) Mandataire: Schaffner, Jean
(86) Numéro de dépôt international: PCT/EP2015/058302
(87) Numéro de publication internationale: WO 2015/165744

(56) Documents cités:
- WO-A1-89/03853
- WO-A1-2013/130610
- US-A1- 2002 052 467

## Description

La présente invention concerne le domaine de l'injection de matière plastique, notamment pour fabriquer une pièce en matière plastique pour un dispositif optique pour véhicule automobile. Des compositions de polycarbonates utilisables dans des dispositifs optiques sont par exemple connues de la demande WO2013/130610 A1. Il est connu de fabriquer des pièces en matières plastiques par injection. On connaît par exemple une unité d'injection de matière plastique comportant un fourreau comprenant une entrée et une sortie de matière ainsi qu'une vis-piston logée dans le fourreau. Cette vis, de type sans fin, sert à mélanger et à entraîner la matière plastique de l'entrée vers la sortie de l'unité puis à injecter la matière dans un moule.

La matière plastique est généralement introduite dans l'unité d'injection sous forme de granulés de matière plastique. On entend par granulés des éléments dont la taille est supérieure à environ 0,5 mm, de préférence supérieure à 1 mm, encore plus préférentiellement égale à environ 2 mm, et n'excède généralement pas 1 cm.

On peut également introduire dans cette unité des additifs, tels que des colorants, des plastifiants, etc.

Or, de plus en plus, on cherche à réduire la quantité de matière plastique utilisée pour produire une pièce donnée et ce, afin de réduire les coûts de production et le poids de la pièce, tout en conservant de bonnes propriétés mécaniques de la pièce.

Toutefois, lorsque l'on désire réduire l'épaisseur des parois de la pièce, il est nécessaire que les cavités des moules dans lesquels la matière est injectée soient plus mince. Or ces cavités plus minces offrent plus de résistance à l'écoulement de la matière plastique fondue. Ceci va requérir des pressions d'injection plus importantes, ce qui nécessite des unités d'injection plus puissantes et souvent plus volumineuses.

Pour éviter d'augmenter la pression pour une unité d'injection donnée, on peut diminuer la viscosité de la matière plastique injectée. Cependant, cette diminution de viscosité lors de l'injection se fait souvent au détriment des propriétés mécaniques de la pièce une fois refroidie.

Il peut être envisagé de réaliser une injection multipoints de la matière plastique dans le moule sans modifier la viscosité de la matière plastique injectée. Cependant, cette solution peut conduire à la formation de lignes dites de recollement qui peuvent fragiliser la pièce. De plus, ces lignes de recollement ne sont souvent esthétiquement pas acceptables.

Il peut également être envisagé d'ajouter des additifs pour diminuer la viscosité de la matière injectée, cependant la présence d'additifs non seulement augmentent le coût de fabrication mais présente également des effets négatifs sur les propriétés mécaniques des matériaux. De plus l'ajout d'additifs pose de nombreux problèmes d'homogénéisation lors de mélange avec la matière plastique précédant l'injection.

Une autre méthode pour fluidifier le matériau est de le faire mousser. Là encore cette méthode a des limites en termes d'aspect et de propriétés physiques de la pièce obtenue, notamment son délaminage.

L'invention a notamment pour but de proposer une composition polymère, en particulier une composition injectable ou extrudable, et notamment une composition polymère thermoplastique, permettant notamment de réaliser une pièce dont l'épaisseur de la paroi est réduite et qui conserve de bonnes propriétés mécaniques.

A cet effet, l'invention a pour objet une composition injectable ou extrudable, plus particulièrement une composition injectable dans un moule, comprenant :
- de 90 à 99,9% en poids d'un premier polymère, et
- de 0,1 à 10% en poids d'un composé lubrifiant obtenu par dépolymérisation partielle d'un polymère,
les pourcentages étant exprimés par rapport au poids total de ladite composition, et le polymère à partir duquel est obtenu le composé lubrifiant étant ledit premier polymère ou un polymère de même nature que ledit premier polymère.

En effet, l'utilisation d'un composé lubrifiant obtenu à partir du polymère constituant la majeure partie du matériau permet d'obtenir des pièces moulées ou extrudées plus fines tout en préservant dans une certaine mesure ou en empêchant une trop grande détérioration de caractéristiques associées à l'utilisation de matériau pur, comme par exemple une meilleure résistance au jaunissement.

Ainsi il est avantageux que le composé lubrifiant soit obtenu à partir d'un produit qui est le même que celui qui constituera le matériau majoritaire de la composition injectable ou extrudable. Comme ce matériau est généralement un polymère, la taille et la structure moléculaire précise des composants de ce matériau peut varier. Il est donc recommandé d'utiliser pour la fabrication du composé lubrifiant un polymère présentant les mêmes caractéristiques structurelles ou physiques ou des caractéristiques similaires ou proches, c'est-à-dire de même nature. Par « caractéristique structurelle », on entend notamment le nature du motif polymérique en question, le degré de polymérisation et/ou la distribution en poids ou en longueur de ces chaînes. Par « caractéristique physique » on entend par exemple une ou plusieurs caractéristiques telles que la densité, la fluidité, le retrait au moulage, l'écoulement, l'écoulement transversal, l'absorption d'eau ; des caractéristiques mécaniques telles que les modules de tractions et de flexion ; des caractéristiques de chocs, de duretés, thermiques, électriques, optiques, d'inflammabilité, de corrosion etc.

Il peut ainsi être envisagé d'utiliser pour l'obtention du composé selon l'invention un polymère provenant du même fabricant, voire d'un même lot, que celui qui sera utilisé par la suite dans la composition selon l'invention.

Cependant ce degré d'identité n'est pas requis pour mettre en pratique l'invention. Ainsi un degré d'identité moindre est suffisant pour la mettre en pratique de manière acceptable. Par exemple l'utilisation d'un polymère de même formule chimique générale (par exemple un polycarbonate) est suffisante pour obtenir les effets techniques recherchés.

Selon un mode de réalisation préféré, le premier polymère est une matière plastique, avantageusement un matériau thermoplastique.

Le premier polymère peut avantageusement être choisi dans le groupe constitué par le polycarbonate (PC), le polycarbonate/Acrylonitrile Butadiène Styrène (PC-ABS), le polyétherimide (PEI), le polycarbonate haute température (PC-HT) ainsi que leurs mélanges. De préférence, le premier polymère est du polycarbonate ou du polycarbonate haute température. Ces polymères sont généralement choisis parmi les types couramment utilisés pour la fabrication de pièces en plastiques moulées ou extrudées utilisées dans l'industrie automobiles.

De préférence le composé lubrifiant est un hydrolysat obtenu par hydrolyse du polymère. Cette hydrolyse permettant la dépolymérisation du polymère. Cette hydrolyse peut avantageusement être réalisée par la mise en présence du polymère avec un mélange d'eau et d'alcool (par exemple de l'éthanol), plus particulièrement un mélange 50/50 v/v de ces composés. Ce mélange peut alors être chauffé. Il est également recommandé d'effectuer la réaction d'hydrolyse sous pression de manière à préserver l'état liquide du milieu réactionnel.

Les conditions réactionnelles et notamment les conditions de pression, de température et de durée de la réaction dépendent en partie du polymère hydrolysé et du degré d'hydrolyse souhaité. Pour un polymère de type polycarbonate (de haute densité ou non) présentant un Mn (g/mol) d'environ 22000 ± 10% et un Mw (g/mol) d'environ 42500 ± 5% (mesurés par détection UV), une température d'environ 260°C ± 10°C à une pression d'environ 50 bar ± 5 bar, un temps de réaction de 10 à 100 minutes (min), de préférence de 15 à 80 min, en particulier de 15 à 25 min, peut être suffisant.

De préférence le degré d'hydrolyse est tel que la masse molaire moyenne en nombre et/ou en masse de l'hydrolysat est réduite d'un facteur allant de 3 à 20 par rapport à celle du premier polymère. Cette masse molaire moyenne en nombre et/ou en masse peut être réduite d'un facteur allant de 5 à 15, plus particulièrement d'un facteur allant de 8 à 12.

De préférence la composition selon l'invention présente une fluidité améliorée, plus particulièrement une fluidité améliorée par rapport à la fluidité du premier polymère. Cette amélioration, est par exemple mesurée en augmentation de MFI. Ainsi, selon un aspect préféré de l'invention, la fluidité d'une composition selon l'invention est doublée par rapport à la fluidité du premier polymère.

Selon un mode de réalisation préféré de l'invention la composition comprend:
- de 97 à 99%, par exemple 98%, en poids de premier polymère, et
- de 1 à 3%, par exemple 2%, en poids de composé lubrifiant,
les pourcentages étant exprimés par rapport au poids total de ladite composition.

La composition selon l'invention peut avantageusement se présenter sous forme solide fractionnée, telle que des granulés ou de la poudre ou un mélange de ces composés. De préférence le composé lubrifiant et le premier polymère sont associés, par exemple par extrusion, pour former des granulés prêts à être utilisés pour la fabrication de pièces, par exemple de pièces moulées.

Selon un mode de réalisation préféré la composition selon l'invention ne comprend qu'un nombre limité de constituants. Ainsi elle peut ne contenir, en plus du composé lubrifiant et du premier polymère, qu'une charge de renfort, par exemple du talc ou des fibres de verre. Le renfort permet d'augmenter les propriétés mécaniques de la pièce moulée. Selon une variante de ce mode de réalisation elle peut également n'être constituée que du composé lubrifiant et du premier polymère.

Alternativement, la composition peut également comprendre une telle charge de renfort en association avec d'autres composés.

Un objet de l'invention est également un procédé de préparation d'une composition telle que décrite ci-avant ledit procédé comprenant les étapes suivantes :
- obtenir un composé lubrifiant par dépolymérisation d'un polymère,
- associer de 10 à 0,1 % en poids dudit composé lubrifiant avec de 90 à 99,1 % en poids dudit polymère ou d'un polymère de même nature,
les pourcentages étant exprimés par rapport au poids total de ladite composition.

Le polymère et le composé lubrifiant peuvent être, indépendamment l'un de l'autre, sous forme de solide fractionné (de poudre, de granulés compactés) ou de résine.

L'étape d'association peut avantageusement comprendre une étape d'extrusion, de préférence d'extrusion de cette association. Il est ainsi possible d'obtenir une composition solide selon l'invention sous forme solide de granulés ou de poudre.

Le procédé selon l'invention peut avantageusement comprendre les étapes décrites ci-avant en rapport avec la composition selon l'invention.

Un autre objet selon l'invention est une composition injectable ou extrudable susceptible d'être obtenue par le procédé selon l'invention.

Un autre objet de l'invention porte sur l'utilisation d'une composition selon l'invention telle que décrite précédemment pour le moulage par injection d'une pièce, de préférence d'une pièce à paroi fine. Par « paroi fine » on entend par exemple des pièces dont l'épaisseur est inférieure à 2 mm.

De préférence ladite pièce est un composant d'un dispositif d'éclairage et/ou de signalisation de véhicule automobile.

Ainsi un objet de l'invention est également une pièce moulée obtenue par injection dans un moule d'une composition et ou selon un procédé tel que défini précédemment.

Selon des caractéristiques optionnelles de l'invention, correspondant à des modes de réalisation possibles, la pièce :
- est une pièce à paroi fine
- est une pièce de véhicule automobile ;
- est une pièce de dispositif lumineux et/ou d'éclairage et/ou de signalisation de véhicule automobile ; et/ou
- est un masque de projecteur ou un boîtier de projecteur.

L'invention a aussi pour objet un dispositif lumineux et/ou d'éclairage et/ou de signalisation, notamment un projecteur, comprenant une pièce selon la présente invention.

Un autre objet selon l'invention est un véhicule automobile comprenant une pièce et/ou un dispositif d'éclairage et/ou de signalisation selon la présente invention.

Pour réaliser de telles pièces selon l'invention on utilise un procédé d'injection, ce procédé étant également un objet de l'invention. Ce procédé utilise une unité d'injection comportant une entrée de matière, une sortie de matière vers un moule et des moyens d'entraînement de la matière entre l'entrée et la sortie de matière (par exemple les filets d'une vis sans fin) et comprend les étapes suivantes :
- on introduit la composition selon l'invention dans l'entrée de l'unité d'injection;
- on entraîne le mélange dans l'unité d'injection, de préférence tout en élevant progressivement la température du mélange lors de son déplacement dans l'unité d'injection;
- on injecte, à travers la sortie de l'unité d'injection, le mélange dans un moule.

Ce procédé peut comprendre une étape préliminaire où avant l'étape d'introduction de la composition on réalise le mélange comprenant la composition selon l'invention.

Ainsi, le procédé de l'invention permet de fabriquer, dans une unité d'injection standard, une pièce en matière plastique de faible épaisseur dont les propriétés mécaniques après injection et refroidissement sont peu ou pas dégradées et qui présente un aspect de surface homogène.

Un mode non limitatif de réalisation de l'invention a été utilisé dans les exemples suivants :

### ETAPE 1 : DEPOLYMERISATION CONTROLEE D'UNE FRACTION DE POLYMERE (RESINE) PAR HYDROLYSE

Un des polymères utilisés est un Polycarbonate de couleur grise vendu par la société BAYER MATERIALSCIENCE sous la dénomination MAKROLON® 2405 dont les caractéristiques techniques spécifiques sont décrites dans la fiche technique UL IDES (société de certification dont l'adresse est Washington, D.C. Government Services 1850 M. St. N.W., Suite 1000 Washington, DC 20036-5833 U.S.A.) en date du 13 septembre 2013.

Un autre polymère utilisé est un Polycarbonate Haute Température vendu par la société APEC® 1895 dont les caractéristiques techniques spécifiques sont décrites dans la fiche technique UL IDES en date du 17 septembre 2013.

D'autres polymères peuvent évidemment être utilisés selon le même mode opératoire.

### Matériel utilisé

Eprouvette graduée de 1L
1 seau plastique en polypropylène de 5L, 3 seaux en PP de 2L
Sachets plastiques hermétiques
Flacon de 250mL en polyéthylène
Balance : Sartorius Signum 1 de capacité max = 6.1kg et de précision ±0.01g

### Mode opératoire

On dilue de l'éthanol à 96% v/v provenant de VWR Chemicals (CAS : 64-17-5) avec de l'eau distillée pour préparer un volume de 1,5L d'éthanol 50%. On prélève donc 0,78L d'éthanol à 96% v/v et on complète ensuite par un volume 1,5-0,78 = 0,72L d'eau distillée.

On divise ce volume par 3 pour préparer 3 solutions eau/éthanol/polymère.

La densité du polycarbonate est de 1,2g/cm³, par conséquent 500mL de PC correspondent à 600g. La densité du polycarbonate haute température est de 1,15g/cm³, par conséquent, 500mL de PC-HT correspondent à 575g.

Le mélange eau/éthanol d'une part et le polymère d'autre part sont placés dans un réacteur (autoclave) à une pression de 50 bar puis le mélange est chauffé pour atteindre 260°C. Le temps de réaction varie de 20 à 80 minutes avant retour aux conditions normales de température et de pression. Le produit de la réaction est alors récupéré et analysé.

De manière préférentielle la pression est choisie de manière à ce que l'eau soit maintenue à l'état liquide.

### Résultats

Les analyses chromatographiques ont été réalisées suivant la norme NF T51-505 (2011) : « Plastiques - Résines thermodurcissables - Analyse par chromatographie d'exclusion stérique (G.P.C.) ».

Les conditions expérimentales suivantes ont été respectées pour chaque échantillon:
- Système 4 colonnes Polymer Laboratories PLGel, 300x7,5 mm, particules de 5 µm, de porosité de 50 à 105 A ; ensemble thermostaté à 40°C.
- Eluant THF qualité analyse filtré; débit 0,5 ml.mn-1.
- Préfiltration de l'échantillon sur filtre PTFE 0,22 µm.
- Double détection RI (indice de réfraction) et UV (ultraviolet) (254 nm).
- Etalonnage polystyrène; dernier effectué 2 à 3 mois avant la mesure.

Les tableaux 1 à 3 suivants rassemblent les masses au pic Mp, les masses moléculaires moyennes en nombre Mn, les masses moléculaires moyennes en poids Mw (en équivalent polystyrène) ainsi que l'indice de polymolécularité IP.

**Tableau 1 : résultats des analyses GPC des échantillons de PC et PC-HT avant hydrolyse**

| | | Mp (g/mole) | Mn (g/mole) | Mw (g/mole) | Ip |
|---|---|---|---|---|---|
| PC-0 ; 1/10/13 | Détection RI | | | | |
| | 1 | 33688 | 20982 | 41699 | 1.99 |
| | 2 | 465 | 558 | 383 | 1 |
| | 3 | 174 | 173 | 184 | 1.06 |
| | Détection UV | | | | |
| | 1 | 36831 | 20627 | 42917 | 2.08 |
| | 2 | 262 | 319 | 303 | 1 |
| | 3 | 177 | 179 | 184 | 1.03 |
| PC-HT-0; 1/10/13 | Détection RI | | | | |
| | 1 | 35484 | 16944 | 40953 | 2.42 |
| | Détection UV | | | | |
| | 1 | 37357 | 21450 | 42595 | 1.99 |
| | 2 | 586 | 609 | 617 | 1.01 |
| | 3 | 266 | 252 | 257 | 1.02 |

**Tableau 2 : résultats des analyses GPC des échantillons de PC après hydrolyse**

| | | Mp (g/mole) | Mn (g/mole) | Mw (g/mole) | Ip |
|---|---|---|---|---|---|
| PC-20 ; 30/09/13 | Détection RI | | | | |
| | 1 | 1892 | 2909 | 3239 | 1.11 |
| | 2 | 1653 | 1409 | 1388 | 1 |
| | 3 | 880 | 783 | 775 | 1 |
| | 4 | 380 | 368 | 377 | 1.02 |
| | 5 | 148 | 153 | 154 | 1.01 |
| | Détection UV | | | | |
| | 1 | 2161 | 2920 | 3235 | 1.11 |
| | 2 | 1631 | 1711 | 1573 | 1 |
| | 3 | 1294 | 1337 | 1186 | 1 |
| | 4 | 822 | 788 | 798 | 1.01 |
| | 5 | 381 | 365 | 370 | 1.01 |
| | 6 | 182 | 173 | 175 | 1.01 |
| PC-40 ; 30/09/13 | Détection RI | | | | |
| | 1 | 2612 | 3883 | 4200 | 1.08 |
| | 2 | 2249 | 1712 | 1755 | 1.02 |
| | 3 | 1129 | 801 | 810 | 1.01 |
| | 4 | 380 | 367 | 373 | 1.02 |
| | 5 | 153 | 157 | 157 | 1 |
| | Détection UV | | | | |
| | 1 | 2586 | 3859 | 4195 | 1.09 |
| | 2 | 2224 | 2300 | 2117 | 1 |
| | 3 | 1712 | 1466 | 1424 | 1 |
| | 4 | 992 | 1018 | 911 | 1 |
| | 5 | 858 | 698 | 677 | 1 |
| | 6 | 382 | 366 | 370 | 1.01 |
| | 7 | 182 | 173 | 177 | 1.02 |
| PC-80 ; 30/09/13 | Détection RI | | | | |
| | 1 | 1394 | 1888 | 2157 | 1.14 |
| | 2 | 920 | 1098 | 985 | 1 |
| | 3 | 815 | 729 | 716 | 1 |
| | 4 | 376 | 371 | 377 | 1.02 |
| | 5 | 153 | 154 | 155 | 1.01 |
| | Détection UV | | | | |
| | 1 | 1513 | 2263 | 2467 | 1.09 |
| | 2 | 1362 | 1352 | 1245 | 1 |
| | 3 | 981 | 1069 | 936 | 1 |
| | 4 | 794 | 720 | 707 | 1 |
| | 5 | 391 | 373 | 377 | 1.01 |
| | 6 | 181 | 175 | 178 | 1.02 |

**Tableau 3 : résultats des analyses GPC des échantillons de PC-HT après hydrolyse**

| | | Mp (g/mole) | Mn (g/mole) | Mw (g/mole) | Ip |
|---|---|---|---|---|---|
| PC-HT20 ; 24/09/13 | Détection RI | | | | |
| | 1 | 6285 | 3308 | 6049 | 1,83 |
| | 2 | 417 | 385 | 394 | 1,02 |
| | 3 | 142 | 158 | 159 | 1,01 |
| | Détection UV | | | | |
| | 1 | 6338 | 4058 | 6694 | 1,65 |
| | 2 | 1149 | 863 | 861 | 1,00 |
| | 3 | 428 | 394 | 403 | 1,02 |
| | 4 | 153 | 155 | 156 | 1,01 |
| PC-HT40 ; 24/09/13 | Détection RI | | | | |
| | 1 | 2701 | 2175 | 3590 | 1,65 |
| | 2 | 427 | 410 | 417 | 1,02 |
| | Détection UV | | | | |
| | 1 | 2523 | 3330 | 4319 | 1,30 |
| | 2 | 1710 | 1484 | 1387 | 1,00 |
| | 3 | 1186 | 1051 | 971 | 1,00 |
| | 4 | 855 | 754 | 708 | 1,00 |
| | 5 | 418 | 438 | 431 | 1,00 |
| | 6 | 335 | 310 | 284 | 1,00 |
| | 7 | 259 | 246 | 222 | 1,00 |
| | 8 | 186 | 169 | 167 | 1,00 |
| PC-HT80 ; 24/09/13 | Détection RI | | | | |
| | 1 | 2386 | 3273 | 4182 | 1,28 |
| | 2 | 1760 | 1313 | 1296 | 1,00 |
| | 3 | 926 | 773 | 743 | 1,00 |
| | 4 | 426 | 385 | 398 | 1,03 |
| | 5 | 151 | 156 | 157 | 1,01 |
| | Détection UV | | | | |
| | 1 | 2203 | 3176 | 3829 | 1,21 |
| | 2 | 1600 | 1524 | 1431 | 1,00 |
| | 3 | 1216 | 1122 | 1011 | 1,00 |
| | 4 | 937 | 789 | 759 | 1,00 |
| | 5 | 423 | 385 | 399 | 1,04 |
| | 6 | 169 | 173 | 174 | 1,01 |

### Conclusion

Ces expériences ont montré que l'hydrolyse effectuée fait chuter de manière très importante les masses molaires moyennes polymères d'origine (0) après seulement 20 min de temps de réaction réalisées aux conditions réactionnelles utilisées.

Pour le PC, la réduction de masse est de l'ordre d'une division par 10 des masses moyennes entre l'échantillon d'origine et après 20min. Cette division des masses se stabilise entre les échantillons ayant subi 20, 40 et 80 min d'hydrolyse.

Pour le PC-HT, la réduction de masse est un peu moins importante, mais reste de l'ordre d'une division par 5. Cette division se poursuit dans une moindre mesure (division par 2) entre l'échantillon ayant subi 20 et 40 min d'hydrolyse. Elle se stabilise entre les échantillons ayant subi 40 et 80 min d'hydrolyse.

### ETAPE 2 : OBTENTION D'UNE POUDRE D'HYDROLYSAT

L'hydrolysat séché se présente sous forme d'une galette (dans le cas du PC hydrolysé pendant 80 min la galette à un poids d'environ 500 grammes) dont les solvants restent à finir d'évaporer. Cette étape peut être effectuée par passage au four à température douce (à 50°C), le temps nécessaire jusqu'à séchage complet.

La galette séchée est alors concassée puis broyée en utilisant un pilon et un mortier manuel. Le broyat est alors tamisé pour obtenir un système pulvérulent, c'est-à-dire une poudre fine de granulométrie utilisable dans un doseur pondéral de type standard équipé d'une vis, par exemple de 100 à 500 microns.

### ETAPE 3 : EXTRUSION

La poudre d'hydrolysat et les granulés de PC d'origine sont associés dans des proportions 2/98 en masse. Ce mélange est alors extrudé par extrudeuse co-rotative bi-vis MARIS 31, (diamètre de vis de 31mm), l'unité d'extrusion a une zone d'échappement de gaz au 3/4 de l'unité d'extrusion. Le débit de cette extrusion est de 12 kg/h. La température de masse (à la tête d'extrusion) à 275°C pour le PC 2405. Le profil de température est de 20 à 30°C inférieur à l'injection (250 à 280°C) pour réduire les augmentations d'indice de jaune causées notamment par l'auto-échauffement ou l'oxydation.

Le matériau est extrudé puis découpé sous forme de joncs x 3 sur un banc de tirage. Les joncs sont refroidis par passage dans un bac d'eau froide puis séchés par lame d'air. Les joncs séchés sont alors découpés de manière à obtenir des granulés qui sont ensachés.

### ETAPE 4 : TEST DES LOTS MODIFIES PAR INJECTION

* Moule de grandes plaques, profil de T°C de 240 à 290°C, RPM = 80, Q=40 cm3/s
Mesures de pertes de masse en température : Tableau 4

### Mesures de MFI (Melt Flow Index) : Tableau 4

**Tableau 4**

| **Produit de base** | **MFI** |
|---|---|
| PC 2405 | 19.39 ± 0.70 |
| PC 2405 extrudé : | 21.89 ± 0.52 |
| PC 2405 + 2% (PCt20) : | 28.25 ± 1.09 |
| PC 2405 + 2% (PCt40) : | 27.55 ± 1.10 |
| PC 2405 + 2% (PCt80) : | 36.06 ± 1.75 |

### Mesures de pressions maximales : Tableau 5

**Tableau 5**

| **Produit de base** | **Pression Maximales en bars** |
|---|---|
| PC 2405 | 933 ± 12 |
| PC 2405 extrudé | 907 ± 4 |
| PC 2405 + 2% (PCt80) | 480 ± 7.5 |

### Mesure de longueur d'écoulement (ratio longueur / épaisseur, ou L/e) repoussant la solidification par combinaison de vitesse à la paroi : tableau 6

La lubrification se traduit généralement par deux mesures sur machine et sur pièce, ce sont les baisses de pression pour une même cavité et l'accroissement de la longueur injectable accessible soit le ratio L/e qui indique également une condition de glissement du matériau à la paroi métallique du moule.

**Tableau 6**

| **Produit de base** | **Ratio L/e** |
|---|---|
| PC 2405 | 14,3 |
| PC 2405 + 2% (PCt20) : | 30,7 |
| PC 2405 + 2% (PCt40) : | 31,3 |
| PC 2405 + 2% (PCt80) : | 37,7 |

Les mesures de module E* et les mesures de pertes de masses (120°C, 4 jours) donnent des résultats statistiquement indistincts sur tous les lots. L'indice de jaune, ou Yi (yellow index) est de 3,34 pour du PC seul et de 4,50 pour le PC comprenant 2% en masse d'hydrolysat ayant subi une hydrolyse de 80 min (PCt80).

L'exemple ci-dessus a été reproduit pour le PC-HT dans les mêmes conditions et des résultats similaires ont été obtenus.

Ainsi la fluidité de la composition basée sur le MFI passe 20 à 36 g/ 10min pour le PC et de 4 à 8g / 10min pour le PC-HT, ceci représentant une amélioration du simple au double.

## Revendications

1. Composition polymère injectable ou extrudable comprenant :
- de 90 à 99,9% en poids d'un premier polymère, et
- de 0,1 à 10% en poids d'un composé lubrifiant obtenu par dépolymérisation partielle d'un polymère,
les pourcentages étant exprimés par rapport au poids total de ladite composition, et le polymère à partir duquel est obtenu le composé lubrifiant étant ledit premier polymère ou un polymère de même nature que ledit premier polymère.

2. Composition selon la revendication 1, dans laquelle ledit premier polymère est sélectionné dans le groupe constitué par le polycarbonate (PC), le polycarbonate/Acrylonitrile Butadiène Styrène (PC-ABS), le polyétherimide (PEI) et le polycarbonate haute température (PC-HT).

3. Composition selon la revendication 2, dans laquelle ledit premier polymère est du polycarbonate ou du polycarbonate haute température.

4. Composition selon l'une quelconque des revendications précédentes, dans laquelle le composé lubrifiant est un hydrolysat obtenu par hydrolyse du polymère.

5. Composition selon la revendication 4, dans laquelle l'hydrolyse est effectuée en présence d'un mélange eau/éthanol.

6. Composition selon la revendication 3 ou la revendication 4, dans laquelle la masse molaire moyenne en nombre et/ou en masse de l'hydrolysat est réduite d'un facteur allant de 3 à 20 par rapport à celle du premier polymère, les masses molaires moyenne étant déterminées selon la méthode divulguée dans la présente description.

7. Composition selon l'une quelconque des revendications précédentes, ladite composition présentant une fluidité améliorée par rapport à la fluidité du premier polymère.

8. Composition selon l'une quelconque des revendications précédentes comprenant:
- de 97 à 99% en poids de premier polymère, et
- de 1 à 3% en poids de composé lubrifiant,
les pourcentages étant exprimés par rapport au poids total de ladite composition.

9. Composition selon l'une quelconque des revendications précédentes, ladite composition étant sous forme solide fractionnée.

10. Procédé de préparation d'une composition selon l'une quelconque des revendications 1 à 9, ledit procédé comprenant les étapes suivantes :
- obtenir un composé lubrifiant par dépolymérisation d'un polymère,
- associer de 10 à 0,1 % en poids dudit composé lubrifiant avec de 90 à 99,1 % en poids dudit polymère ou d'un polymère de même nature,
les pourcentages étant exprimés par rapport au poids total de ladite composition.

11. Procédé selon la revendication 10, dans lequel le polymère et le composé lubrifiant sont, indépendamment l'un de l'autre, sous forme de solide fractionné (de poudre, de granulés compactés) ou de résine.

12. Composition injectable ou extrudable susceptible d'être obtenue par le procédé selon l'une quelconque des revendications 10 à 11.

13. Utilisation d'une composition selon l'une quelconque des revendications 1 à 9 et 12, pour le moulage par injection d'une pièce, de préférence d'une pièce à paroi fine.

14. Pièce de dispositif lumineux de véhicule automobile obtenue par injection dans un moule d'une composition selon l'une quelconque des revendications 1 à 9 et 12.

15. Pièce selon la revendication 14, ladite pièce étant un masque ou un boîtier.

16. Dispositif lumineux de véhicule comprenant une pièce selon la revendication 14 ou 15.

17. Procédé d'injection pour l'obtention d'une pièce selon l'une des revendications 14 ou 15, dans lequel on utilise une unité d'injection comportant une entrée de matière, une sortie de matière vers un moule et des moyens d'entraînement de la matière entre l'entrée et la sortie de matière, le procédé comprend les étapes suivantes :
- on introduit la composition selon l'une quelconque des revendications 1 à 9 ou 12 dans l'entrée de l'unité d'injection;
- on entraîne la composition dans l'unité d'injection ;
- on injecte, à travers la sortie de l'unité d'injection, le mélange dans un moule.

18. Procédé selon la revendication 17, dans lequel l'entraînement de la composition dans l'unité d'injection est réalisé tout en élevant progressivement la température du mélange lors de son déplacement dans l'unité d'injection.

19. Procédé selon la revendication 17 ou la revendication 18, dans lequel avant l'étape d'introduction de la composition selon l'invention dans l'entrée de l'unité d'injection, on réalise un mélange comprenant la composition selon l'invention.

## Patentansprüche

1. Spritzbare oder extrudierbare Polymerzusammensetzung, umfassend:
- 90 bis 99,9 Gew.-% eines ersten Polymers und
- 0,1 bis 10 Gew.-% einer Schmierverbindung, die durch partielle Depolymerisation eines Polymers erhalten wird,
wobei die Prozentsätze bezogen auf das Gesamtgewicht der Zusammensetzung ausgedrückt sind und das Polymer, aus dem die Schmierverbindung erhalten wird, das erste Polymer oder ein Polymer der gleichen Art wie das erste Polymer ist.

2. Zusammensetzung nach Anspruch 1, wobei das erste Polymer aus der Gruppe ausgewählt ist, die aus Polycarbonat (PC), Polycarbonat/Acrylnitril-Butadien-Styrol (PC-ABS), Polyetherimid (PEI) und Hochtemperatur-Polycarbonat (HT-PC) besteht.

3. Zusammensetzung nach Anspruch 2, wobei das erste Polymer Polycarbonat oder Hochtemperatur-Polycarbonat ist.

4. Zusammensetzung nach einem der vorhergehenden Ansprüche, wobei die Schmierverbindung ein durch Hydrolyse des Polymers erhaltenes Hydrolysat ist.

5. Zusammensetzung nach Anspruch 4, wobei die Hydrolyse in Gegenwart eines Wasser/Ethanol-Gemischs durchgeführt wird.

6. Zusammensetzung nach Anspruch 3 oder Anspruch 4, wobei die zahlen- und/oder massenmittlere Molmasse des Hydrolysats um einen Faktor von 3 bis 20 im Vergleich zu derjenigen des ersten Polymers verringert ist, wobei die mittleren Molmassen gemäß dem in der vorliegenden Beschreibung offenbarten Verfahren bestimmt werden.

7. Zusammensetzung nach einem der vorhergehenden Ansprüche, wobei die Zusammensetzung eine verbesserte Fließfähigkeit im Vergleich zu der Fließfähigkeit des ersten Polymers aufweist.

8. Zusammensetzung nach einem der vorhergehenden Ansprüche, umfassend:
- 97 bis 99 Gew.-% erstes Polymer und
- 1 bis 3 Gew.-% Schmierverbindung,
wobei die Prozentsätze bezogen auf das Gesamtgewicht der Zusammensetzung ausgedrückt sind.

9. Zusammensetzung nach einem der vorhergehenden Ansprüche, wobei die Zusammensetzung in fester zerkleinerter Form vorliegt.

10. Verfahren zur Herstellung einer Zusammensetzung nach einem der Ansprüche 1 bis 9, wobei das Verfahren die folgenden Schritte umfasst:
- Erhalten einer Schmierverbindung durch Depolymerisation eines Polymers,
- Vereinigen von 10 bis 0,1 Gew.-% der Schmierverbindung mit 90 bis 99,1 Gew.-% des Polymers oder eines Polymers der gleichen Art,
wobei die Prozentsätze bezogen auf das Gesamtgewicht der Zusammensetzung ausgedrückt sind.

11. Verfahren nach Anspruch 10, wobei das Polymer und die Schmierverbindung unabhängig voneinander in Form eines zerkleinerten Feststoffs (als Pulver, gepresstes Granulat) oder in Harzform vorliegen.

12. Spritzbare oder extrudierbare Zusammensetzung, die durch das Verfahren nach einem der Ansprüche 10 bis 11 erhalten werden kann.

13. Verwendung einer Zusammensetzung nach einem der Ansprüche 1 bis 9 und 12 zum Spritzgießen eines Teils, vorzugsweise eines dünnwandigen Teils.

14. Kraftfahrzeug-Leuchteinrichtungsteil, erhalten durch Einspritzen einer Zusammensetzung nach einem der Ansprüche 1 bis 9 und 12 in eine Form.

15. Teil nach Anspruch 14, wobei das Teil eine Abdeckung oder ein Gehäuse ist.

16. Fahrzeug-Leuchteinrichtung, umfassend ein Teil nach Anspruch 14 oder 15.

17. Spritzverfahren zum Erhalten eines Teils nach einem der Ansprüche 14 oder 15, wobei man eine Spritzeinheit verwendet, die einen Materialeinlass, einen Materialauslass in Richtung zu einer Form und Mittel zum Befördern des Materials zwischen dem Materialeinlass und dem Materialauslass beinhaltet, wobei das Verfahren die folgenden Schritte umfasst:
- man bringt die Zusammensetzung nach einem der Ansprüche 1 bis 9 und 12 in den Einlass der Spritzeinheit ein;
- man befördert die Zusammensetzung in die Spritzeinheit;
- man spritzt das Gemisch durch den Auslass der Spritzeinheit in eine Form.

18. Verfahren nach Anspruch 17, wobei das Befördern der Zusammensetzung in die Spritzeinheit unter gleichzeitigem allmählichem Erhöhen der Temperatur des Gemischs während dessen Transport in die Spritzeinheit durchgeführt wird.

19. Verfahren nach Anspruch 17 oder Anspruch 18, wobei man vor dem Schritt des Einbringens der erfindungsgemäßen Zusammensetzung in den Einlass der Spritzeinheit ein Gemisch herstellt, das die erfindungsgemäße Zusammensetzung umfasst.

## Claims

1. Injectable or extrudable polymer composition comprising:
- from 90% to 99.9% by weight of a first polymer, and
- from 0.1% to 10% by weight of a lubricating compound obtained by partially depolymerisation of a polymer,
the percentages being expressed relative to the total weight of said composition, and the polymer from which the lubricating compound is obtained being said first polymer or a polymer of the same nature as said first polymer.

2. Composition according to Claim 1, in which said first polymer is selected from the group consisting of polycarbonate (PC), polycarbonate/acrylonitrile butadiene styrene (PC-ABS), polyetherimide (PEI) and high-heat polycarbonate (HH-PC).

3. Composition according to Claim 2, in which said first polymer is polycarbonate or high-heat polycarbonate.

4. Composition according to any one of the preceding claims, in which the lubricating compound is a hydrolysate obtained by hydrolysis of the polymer.

5. Composition according to Claim 4, in which the hydrolysis is carried out in the presence of a water/ethanol mixture.

6. Composition according to Claim 3 or Claim 4, in which the number-average and/or weight-average molar mass of the hydrolysate is reduced by a factor ranging from 3 to 20 with respect to that of the first polymer, the average molar masses being determined according to the method disclosed in the present description.

7. Composition according to any one of the preceding claims, said composition having an improved fluidity with respect to the fluidity of the first polymer.

8. Composition according to any one of the preceding claims, comprising:
- from 97% to 99% by weight of the first polymer, and
- from 1% to 3% by weight of lubricating compound,
the percentages being expressed relative to the total weight of said composition.

9. Composition according to any one of the preceding claims, said composition being in fractionated solid form.

10. Process for preparing a composition according to any one of Claims 1 to 9, said process comprising the following steps:
- obtaining a lubricating compound by depolymerisation of a polymer,
- combining from 10% to 0.1% by weight of said lubricating compound with from 90% to 99.1% by weight of said polymer or of a polymer of the same nature,
the percentages being expressed relative to the total weight of said composition.

11. Process according to Claim 10, in which the polymer and the lubricating compound are, independently of one another, in fractionated solid form (powder form, compacted granules form) or resin form.

12. Injectable or extrudable composition capable of being obtained by means of the process according to either one of Claims 10 and 11.

13. Use of a composition according to any one of Claims 1 to 9 and 12, for the injection-moulding of a part, preferably of a thin-walled part.

14. Motor vehicle luminous device part obtained by injection, into a mould, of a composition according to any one of Claims 1 to 9 and 12.

15. Part according to Claim 14, said part being a shield or a housing.

16. Vehicle luminous device comprising a part according to Claims 14 or 15.

17. Injection process for obtaining a part according to either of Claims 14 and 15, in which use is made of an injection unit comprising a material inlet, an outlet for material towards a mould and means for conveying the material between the material inlet and outlet, the process comprising the following steps:
- the composition according to any one of Claims 1 to 9 or 12 is introduced into the inlet of the injection unit;
- the composition is conveyed in the injection unit;
- the mixture is injected, through the outlet of the injection unit, into a mould.

18. Process according to Claim 17, in which the conveying of the composition in the injection unit is carried out while gradually raising the temperature of the mixture during its displacement in the injection unit.

19. Process according to Claim 17 or Claim 18, in which, before the step of introduction of the composition according to the invention into the inlet of the injection unit, a mixture comprising the composition according to the invention is prepared.
